# EUROPEAN PATENT APPLICATION

(11) **EP 4 596 152 A1**
(43) Date of publication of application: **06.08.2025**
(21) Application number: 24218479.4
(22) Date of filing: 09.12.2024
(51) Int. Cl.: B23B 51/06

(54) **CUTTING TOOL**

(30) Priority: 31.01.2024 JP 2024012575
(71) Applicant: Tungaloy Corporation, Iwaki-shi, Fukushima 970-1144 (JP)
(72) Inventor: SASAKI, Ryou, Iwaki-shi, Fukushima, 9701144 (JP)
(74) Representative: Vossius & Partner Patentanwälte Rechtsanwälte mbB

(57) **Abstract**

A cutting tool (10) includes: a shank part (14) that is substantially cylindrical in shape and provided at a base end portion (10b) of the cutting tool (10); a cutting edge (18) located at a leading end portion (10t) of the cutting tool (10); a chip discharge groove (30) formed from the cutting edge (18) toward the base end portion (10b) of the cutting tool (10), for guiding and discharging chips generated during cutting; and a plurality of groove-like coolant flow paths (40) provided on a periphery of the cutting tool (10), for supplying coolant toward the leading end portion (10t). In a leading end view where the cutting tool (10) is viewed from the leading end portion (10t) along the central axis (10A) extending in a longitudinal direction of the cutting tool (10), a first coolant flow path (41) of the plurality of coolant flow paths (40) is located at an upper side relative to the cutting edge (18).

## Description

### Background

### Field

The present invention relates to a cutting tool.

### Description of Related Art

In a type of cutting tool, fluid, such as coolant, is supplied from the outside of the tool; however, such external supply type cutting tools have difficulty in delivering coolant properly to the machining point. As a solution to such problem with external supply type cutting tools, a conventional technique provides cutting tools of an internal supply type as shown in, for example, JP2003-071608 A, JP2007-185765 A and JP2010-105084 A; however, these internal supply type cutting tools are not suited for size reduction, due to their structure of supplying fluid through a flow path formed inside the tool. As a solution to this problem, a conventional technique provides another type of tool having a groove formed on the shank of the tool, like those shown in JP2013-501638 A and JP2013-519537 A.

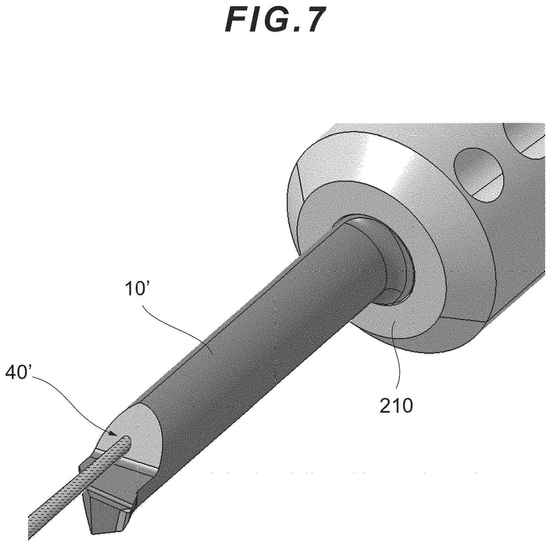

When an external supply type cutting tool that supplies coolant and other fluid from the periphery of the tool is used for boring or drilling, it may be unable to deliver a sufficient amount of fluid to the area near the machining point inside the workpiece. In such cases, using a cutting tool 10' that supplies fluid through a hole 40' formed inside the tool (which is accordingly called an internal supply type cutting tool) may be an option (see Fig. 7). However, when machining a relatively small hole, the tool needs to have a reduced size that is sufficient to allow the tool to enter the small hole, in which case the tool may no longer have available space for making a fluid supply hole inside the tool. Meanwhile, for cutting tools of the external supply type, particularly small-sized cutting tools, both improving the tools so as to be able to adequately cool the tip of the cutting edge and to accordingly achieve a prolonged life of the tool, and further enhancing the capability of discharging chips, are demanded in practice.

### Summary

Under the above-described circumstances, an object of the present invention is to provide a cutting tool capable of supplying a sufficient amount of fluid, such as coolant, to an area near the machining point of a workpiece even when the cutting tool is a small-sized tool, and having a structure that provides improved capabilities of cooling the tip of the cutting edge and discharging chips.

In order to achieve the above object, the present inventors conducted studies from various aspects. Some conventional cutting tools have a cooling groove formed at the shank part of the tool and supply fluid to an area near the machining point through the groove. In such cutting tools, the supply direction of the fluid is opposite to the direction in which chips are discharged from the area near the machining point during machining. This may be an obvious consequence; however, such structure may allow the fluid discharged from the fluid supply groove to rather act to push back the chips, resulting in interfering with the discharge of the chips. Bearing these points in mind, the present inventors continued further studies from the viewpoints of improving the capability of cooling the tip of the cutting edge and also improving the capability of discharging chips, and finally obtained a finding leading to a solution to these problems.

The present invention has been made based on such finding. According to an aspect of the present invention, a cutting tool is provided, which has:
- a shank part that is substantially cylindrical in shape and provided at a base end portion of the cutting tool, the shank part serving as a portion that is attached to a sleeve mountable to a machine tool;
- a cutting edge located at a leading end portion of the cutting tool;
- a chip discharge groove formed from the cutting edge toward the base end portion of the cutting tool, for guiding and discharging chips generated during cutting; and
- a plurality of groove-like coolant flow paths provided on a periphery of the cutting tool, for supplying coolant toward the leading end portion,
wherein, in a leading end view where the cutting tool is viewed from the leading end portion along a central axis extending in a longitudinal direction of the cutting tool, a first coolant flow path of the plurality of coolant flow paths is located at an upper side relative to the cutting edge.

In this cutting tool, at least one of the plurality of coolant flow paths provided on the periphery of the cutting tool is located at a position that does not overlap with either the cutting edge or the chip discharge groove. To put it another way, at least one coolant flow path is set in a state of having no association with the cutting edge or the chip discharge groove. With this configuration, a flow of fluid supply does not prevent the discharge of chips, while a flow of discharged chips does not prevent the flow of fluid supply. Furthermore, a first coolant flow path of the plurality of coolant flow paths is located at an upper side relative to the cutting edge in a leading end view, and this structure can achieve improved capabilities of cooling the tip of the cutting edge and discharging chips.

In the above-described cutting tool, the first coolant flow path may be located on the periphery of the cutting tool on a side where a rake surface of the cutting edge is located.

In the above-described cutting tool, in a leading end view where the cutting tool is viewed from the leading end portion, the first coolant flow path may be located at a position through which a line that perpendicularly intersects the cutting edge passes.

In the above-described cutting tool, in a leading end view where the cutting tool is viewed from the leading end portion, the first coolant flow path may be located at a position that does not communicate with the chip discharge groove.

In the above-described cutting tool, in a leading end view where the cutting tool is viewed from the leading end portion, each of the plurality of coolant flow paths, other than the first coolant flow path, may be provided at a position that does not overlap with either the cutting edge or the chip discharge groove.

In the above-described cutting tool, the plurality of coolant flow paths may include second and third coolant flow paths as coolant flow paths other than the first coolant flow path.

In the above-described cutting tool, in a leading end view where the cutting tool is viewed from the leading end portion, each of the second and third coolant flow paths may be provided at a different position from the position of the chip discharge groove in a circumferential direction.

In the above-described cutting tool, a cut portion may be formed at the leading end portion of the cutting tool, for enlarging a flow path of coolant that is supplied from the coolant flow paths and flows up to the chip discharge groove.

In the above-described cutting tool, the cut portion may be configured with an inclined surface that is not perpendicular to the central axis.

In the above-described cutting tool, in a leading end view where the cutting tool is viewed from the leading end portion, the cut portion may be provided on a side where the second coolant flow path or the third coolant flow path is located.

In the above-described cutting tool, an outer diameter of the shank part may be larger than the outer diameter of the leading end portion.

In the above-described cutting tool, a stepped part may be formed between the shank part and a portion extending toward the leading end portion from the shank part.

In the above-described cutting tool, each of the plurality of coolant flow paths may be provided only on the periphery of the shank part.

In the above-described cutting tool, the shank part may have a cut portion that is formed as a flat surface and acts as an anti-rotation stop against the sleeve of the machine tool, and the coolant flow paths may be formed at positions that do not overlap with the cut portion.

In the above-described cutting tool, the coolant flow paths may be configured with a groove in a circular arc shape.

In the above-described cutting tool, the coolant flow paths may be formed as straight flow paths parallel to the central axis of the cutting tool.

In the above-described cutting tool, the chip discharge groove may be formed in a helical shape.

In the above-described cutting tool, the cutting edge may be configured with an edge that is integral with the cutting tool.

In the above-described cutting tool, an insert mounting seat may be provided at the leading end portion of the cutting tool so that a cutting insert is mounted to the insert mounting seat.

The above-described cutting tool may be a turning tool.

The above-described cutting tool may be a brazed tool in which a cutting insert is brazed at the leading end portion of the tool.

### Brief Description of Drawings

Fig. 1 is a perspective view showing an example of a cutting tool according to the present invention.
Fig. 2 is a perspective view of the cutting tool when viewed from another angle.
Fig. 3 is an illustration (a leading end view) of the cutting tool when viewed from a leading end portion of the cutting tool.
Fig. 4 is an illustration (a base end view) of the cutting tool when viewed from a base end portion of the cutting tool.
Fig. 5 is a perspective view showing a flow of coolant in an inclined surface (a cut portion) formed at a leading end portion of the cutting tool.
Fig. 6 is an illustration explaining the situation inside a workpiece when the workpiece is being drilled.
Fig. 7 is a perspective view showing an example of a conventional cutting tool for reference.

### Detailed Description

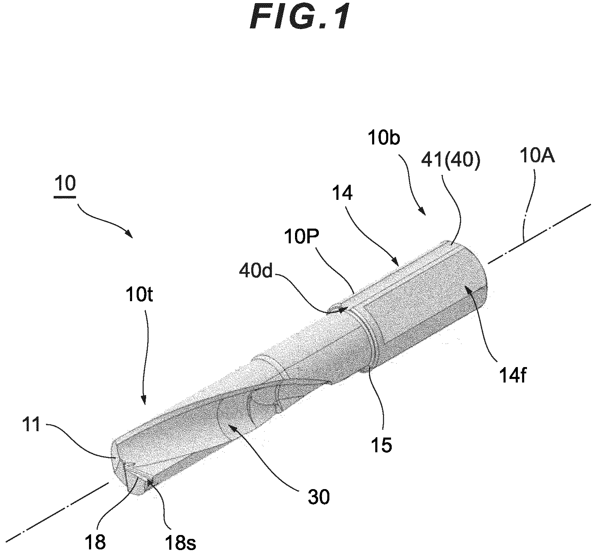

Preferred embodiments of a cutting tool according to the present invention will now be described in detail, with reference to the attached drawings (see Figs. 1-6).

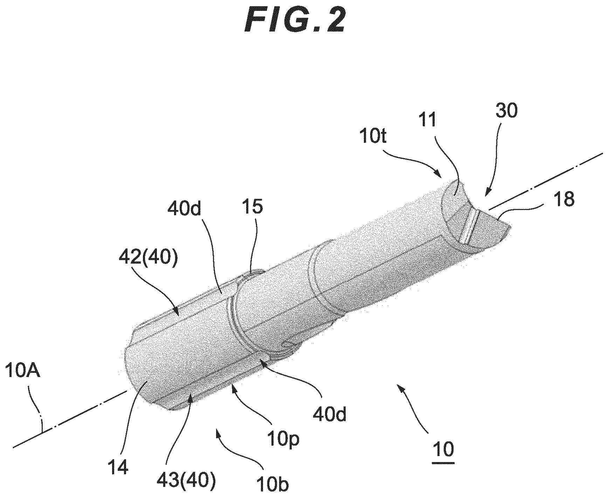

A cutting tool according to the present invention is configured particularly as a tool suitable for boring (inner diameter machining), such as a small-sized turning tool or drilling tool. A cutting tool 10 according to the present embodiment includes a shank part 14, a cutting edge 18, a chip discharge groove 30, a coolant flow path 40, and others. The cutting tool 10 is formed in a substantially cylindrical shape extending from a base end portion 10b to a leading end portion 10t along a central axis 10A (see Figs. 1 and 2, etc.). The shank part 14 is provided at the base end portion 10b side of the cutting tool 10, while the cutting edge 18 is located at the leading end portion 10t of the cutting tool 10.

The shank part 14 is a portion of the cutting tool 10 that is attached to a sleeve (indicated by reference numeral 210 in Fig. 7) which is mountable to a machine tool, and such portion is provided at the base end portion 10b side of the cutting tool 10 (see Figs. 1 and 2, etc.). The shank part 14 is generally cylindrical in shape, and a portion of the shank part 14 has a cut portion 14f that is formed so as to serve as a stopper for stopping rotation against the sleeve 210. The cut portion 14f may be a flat surface that is parallel to the central axis 10A (see Fig. 1, etc.). The shank part 14 of the cutting tool 10 of the present embodiment is formed so that its outer diameter is greater that the outer diameters of other portions (e.g., the leading end portion 10t) of the cutting tool 10 and the shank part 14 is the largest portion in the cutting tool 10. A stepped part 15 is formed between the shank part 14 and a portion of the cutting tool 10 that extends from the shark part 14 to the leading end portion 10t, and the outer diameter of the cutting tool 10 steeply changes in this stepped part 15 (see Figs. 1 and 2, etc.).

The cutting edge 18 is configured with an edge located at the leading end portion 10t (see Fig. 1 etc.). In the cutting tool 10 of the present embodiment, the cutting edge 18 is configured with an edge that is integral with the cutting tool 10; however, this is just a preferred example, and the present invention is not limited to this configuration. Although not shown in the drawings, the cutting tool 10 may employ a configuration in which an insert mounting seat is provided at the leading end portion 10t so as to mount a cutting insert to the insert mounting seat. The cutting tool 10 may be a brazed tool having a cutting insert brazed to the tool.

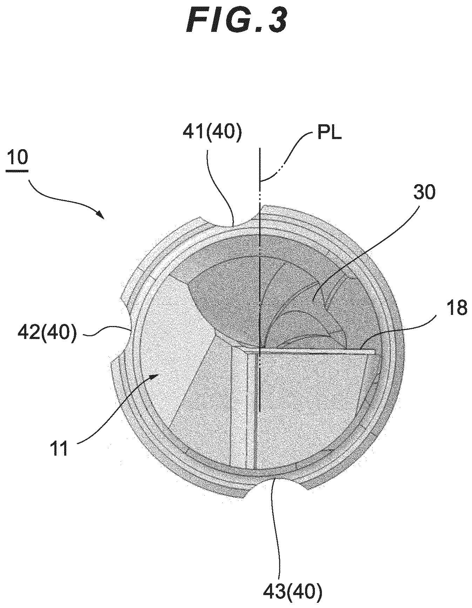

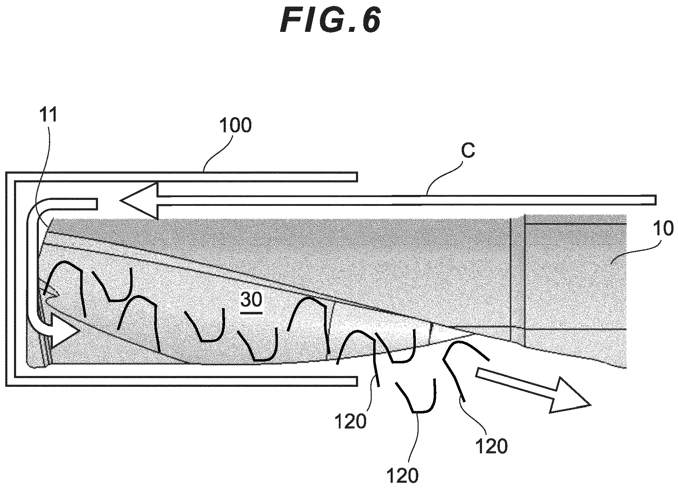

The chip discharge groove 30 is a groove for guiding and discharging chips generated during cutting (such chips are indicated by reference numeral 120 in Fig. 6). The chip discharge groove 30 in the cutting tool 10 of the present embodiment is formed as a helically-shaped pocket extending from a rake surface 18s of the cutting edge 18 toward the base end portion 10b of the cutting tool 10 (see Figs. 1 and 3, etc.).

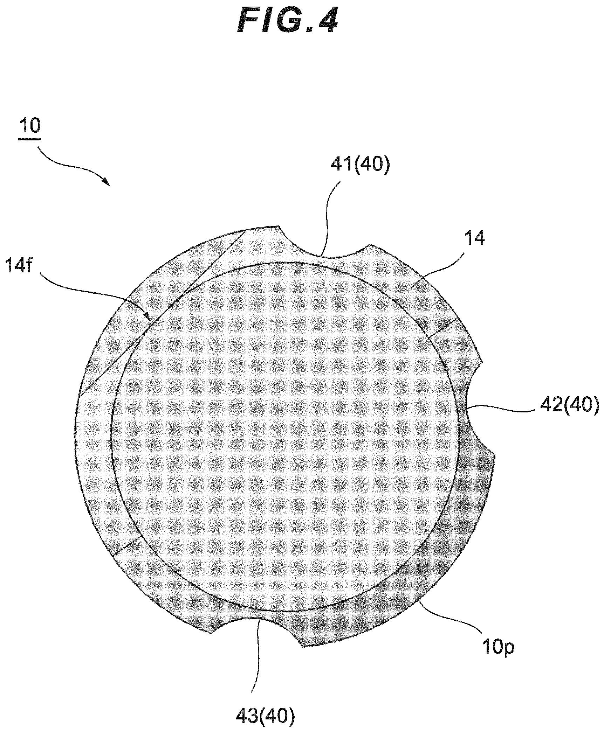

The coolant flow path 40 is formed in the cutting tool 10 in a manner such that coolant C is supplied toward the leading end portion 10t. In the cutting tool 10 of the present embodiment, the coolant flow path 40 is configured with fluid supply grooves (e.g., three such grooves) that are formed only on the periphery portion of the shank part 14 within the periphery (indicated by reference numeral 10p) of the cutting tool 10 (see Figs. 1-4). A discharge port 40d of the coolant flow path 40 is positioned at a portion where the stepped part 15 is formed (see Figs. 1 and 2). The coolant flow path 40 may be configured with a groove having a cross-section in, for example, a circular-arc shape, as is the case with the present embodiment (see Figs. 3 and 4), and may also be a groove having a different shape. Such coolant flow paths 40 are formed so as to extend straight along the central axis 10A of the cutting tool 10 and parallel to the central axis 10A (see Figs. 2 and 3, etc.).

The below description will be made by referring to the coolant flow paths located on the upper side, on the left, and on the lower side in Fig. 3, as a first coolant flow path 41, a second coolant flow path 42 and a third coolant flow path 43, respectively. The second and third coolant flow paths 42 and 43 will be described first, and then the first coolant flow path 41 will be described. After that, a cut portion 11 formed at the leading end portion 10t will also be described (see Figs. 1-4).

### Second and Third Coolant Flow Paths

Each of the second and third coolant flow paths 42 and 43 in the cutting tool 10 of the present embodiment is provided at a position that does not overlap with the cutting edge 18 or the chip discharge groove 30 (see Fig. 3, etc.). For example, when the cutting tool 10 is viewed from the leading end portion 10t (such view is herein referred to as a "leading end view"), the respective circumferential positions of the second and third coolant flow paths 42 and 43 are different from the circumferential position of the chip discharge groove 30 (i.e., their positions do not overlap with the chip discharge groove 30 in the circumferential direction) (see Fig. 3). In the cutting tool 10 having the above-described configuration, neither the second coolant flow path 42 nor the third coolant flow path 43 overlaps with the cutting edge 18 or the chip discharge groove 30; in other words, these coolant flow paths 42 and 43 have no association with the cutting edge 18 or the chip discharge groove 30. Accordingly, the flow of coolant C supplied toward the leading end portion 10t through the coolant flow paths 42 and 43 does not prevent the discharge of chips 120, and a flow of chips being discharged does not prevent the supply of fluid (coolant) (see Fig. 6). Thus, particularly when the cutting tool 10 is a small-sized tool so that it is difficult to provide second and third coolant flow paths 42 and 43 inside the cutting tool, a sufficient amount of coolant C can still be supplied to an area near the machining point of a workpiece 100. Therefore, according to the cutting tool 10 having the configuration as described in the present embodiment, when such cutting tool is used for a tool for boring (inner diameter machining), particularly for a small-sized turning or drilling tool, fluid (coolant) is supplied from the shank part 14 toward the inside of the workpiece 100, and both the discharge of chips 120 and the cooling and lubrication of the tip of the cutting edge can be performed in an effective manner.

The above-described second and third coolant flow paths 42 and 43 are formed at positions that do not even overlap with the cut portion 14f (see Fig. 1, etc.). The present embodiment describes: (i) an example in which the second coolant flow path 42 is disposed at a position that, when viewed from the base end portion 10b (i.e., in a base end view), forms an angle of 105 degrees or more and 135 degrees or less (e.g., an angle of approximately 120 degrees) in a clockwise direction relative to (the center of) the cut portion 14f (see Fig. 4) (to put it another way, the second coolant flow path 42 is disposed at a position that, when viewed from the leading end portion 10t (i.e., in a leading end view) (see Fig. 3), forms an angle of 155 degrees or more and 185 degrees or less in a counterclockwise direction relative to the line connecting the central axis 10A and the outermost part of the cutting edge 18); and (ii) an example in which the third coolant flow path 43 is disposed at a position that, when viewed from the base end portion 10b (i.e., in a base end view), forms an angle of 105 degrees or more and 135 degrees or less (e.g., an angle of approximately 120 degrees) in a counterclockwise direction relative to (the center of) the cut portion 14f (see Fig. 4) (to put it another way, the third coolant flow path 43 is disposed at a position that, when viewed from the leading end portion 10t (i.e., in a leading end view) (see Fig. 3), forms an angle of 65 degrees or more and 95 degrees or less in a clockwise direction relative to the line connecting the central axis 10A and the outermost part of the cutting edge 18). These are merely examples of preferred arrangements, and the specific positions of the second and third coolant flow paths are not limited thereto, as long as they do not overlap with the cutting edge 18 or the chip discharge groove 30, nor with the cut portion 14f.

### First Coolant Flow Path

In a leading end view where the cutting tool 10 is viewed from the leading end portion 10t along the central axis 10A, with the cutting edge 18 facing up, the first coolant flow path 41 in the cutting tool 10 of the present embodiment is located at the upper side relative to such cutting edge 18, and more specifically, is located on a side where the rake surface 18s of the cutting edge 18 is located (see Fig. 3). In such leading end view of the cutting tool 10 viewed from the leading end portion 10t, when a perpendicular line PL is assumed as being a line that perpendicularly crosses the cutting edge 18 (see Fig. 3), the first coolant flow path 41 of the present embodiment is located at a position through which the perpendicular line PL passes. Further, the first coolant flow path 41 is arranged in a manner such that the periphery 10p exists between the first coolant flow path 41 and the chip discharge groove 30 (see Fig. 1). As a result, the first coolant flow path 41 in the present embodiment does not communicate with the chip discharge groove 30, in a leading end view where the cutting tool 10 is viewed from the leading end portion 10t (see Fig. 3).

As described above, the cutting tool 10 of the present embodiment employs a structure in which the first coolant flow path 41, which is one of the plurality of coolant flow paths, is located at an upper side relative to the cutting edge 18 in a leading end view, and this structure can increase the amount of coolant C supplied toward the cutting edge 18 through the first coolant flow path 41, leading to the enhanced capability of cooling the tip of the cutting edge 18 and further enhancing the capability of discharging chips 120. It should be noted here that, in a leading end view where the cutting tool 10 is viewed from the leading end portion 10t, the position of the first coolant flow path 41 overlaps with the position of the chip discharge groove 30 (see Fig. 3) and it may appear, from this illustration alone, that coolant C supplied from the first coolant flow path 41 may interfere with the discharge of chips. However, in reality, the chip discharge groove 30 is formed as a helically-shaped pocket that extends from the rake surface 18s of the cutting edge 18 toward the base end portion 10b and, as such, most of the first coolant flow path 41 and the chip discharge groove 30 do not overlap with each other, in terms of their three-dimensional structure (see Fig. 1, etc.). Accordingly, unlike the impression that may be given by Fig. 3, etc., coolant C supplied from the first coolant flow path 41 does not interfere with the discharge of chips.

### Cut Portion Formed at Leading End Portion

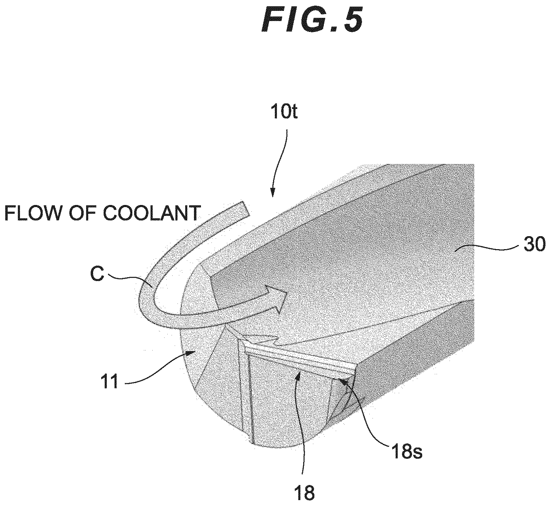

In the present embodiment, a cut portion 11 is provided at the leading end portion 10t of the cutting tool 10 for enlarging the flow path of coolant C which is supplied from the coolant flow path 40 and flows up to the chip discharge groove 30 (see Figs. 1-3). A specific example of such cut portion 11 may be an inclined surface which is not perpendicular to the central axis 10A and, in a leading end view where the cutting tool 10 is viewed from the leading end portion 10t, such inclined surface is provided on a side where the second coolant flow path 42 is located (see Fig. 3, etc.). The inclined surface is formed so as to be inclined toward the second coolant flow path 42 (more specifically, the surface is inclined from the leading end portion 10t toward the base end portion 10b as it heads to the second coolant flow path 42) (see Fig. 1, etc.). Such cut portion 11, which is configured as an inclined surface that connects to the chip discharge groove 30, creates a larger space inside the workpiece 100 in which coolant C can circulate, and this facilitates the flow of coolant C over the cutting edge 18 and inside the chip discharge groove 30, thereby enhancing the cooling of the tip of the cutting edge 18 and the discharge of chips 120 (see Figs. 5 and 6, etc.). The above-described inclined surface is merely a preferred example of the cut portion 11 that can provide the above-mentioned function, and the specific structure or form of the cut portion 11 is not limited to such inclined surface. For example, the cut portion 11 may be configured as a curved surface, or with a groove or recessed and raised portions. In addition, the arrangement of the cut portion 11 is not limited and the cut portion 11 may be located at a position other than the position close to the second coolant flow path 42.

Although preferred embodiments of the present invention have been described above, the present invention is not limited to the described examples and may be modified in various ways without departing from the spirit of the present invention. For example, the above embodiment describes an example in which three coolant flow paths 40 (first, second and third coolant flow paths 41, 42 and 43) are formed; however, the number of the coolant flow paths 40 is not limited, and the shape and form of the coolant flow path 40 are also not limited. Further, when two or more coolant flow paths 40 are provided, their sizes and forms may be different from each other.

The present invention is suited for use in cutting tools.

## Claims

1. A cutting tool comprising:
a shank part that is substantially cylindrical in shape and provided at a base end portion of the cutting tool, the shank part serving as a portion that is attached to a sleeve mountable to a machine tool;
a cutting edge located at a leading end portion of the cutting tool;
a chip discharge groove formed from the cutting edge toward the base end portion of the cutting tool, for guiding and discharging chips generated during cutting; and
a plurality of groove-like coolant flow paths provided on a periphery of the cutting tool, for supplying coolant toward the leading end portion,
wherein, in a leading end view where the cutting tool is viewed from the leading end portion along a central axis extending in a longitudinal direction of the cutting tool, a first coolant flow path of the plurality of coolant flow paths is located at an upper side relative to the cutting edge.

2. The cutting tool according to claim 1, wherein the first coolant flow path is located on the periphery of the cutting tool on a side where a rake surface of the cutting edge is located.

3. The cutting tool according to claim1 or 2, wherein, in a leading end view where the cutting tool is viewed from the leading end portion, the first coolant flow path is located at a position through which a line that perpendicularly intersects the cutting edge passes.

4. The cutting tool according to any one of claims 1 to 3, wherein, in a leading end view where the cutting tool is viewed from the leading end portion, the first coolant flow path is located at a position that does not communicate with the chip discharge groove.

5. The cutting tool according to any one of claims 1 to 4, wherein, in a leading end view where the cutting tool is viewed from the leading end portion, each of the plurality of coolant flow paths, other than the first coolant flow path, is provided at a position that does not overlap with either the cutting edge or the chip discharge groove.

6. The cutting tool according to any one of claims 1 to 5, wherein the plurality of coolant flow paths includes second and third coolant flow paths as coolant flow paths other than the first coolant flow path.

7. The cutting tool according to claim 6, wherein, in a leading end view where the cutting tool is viewed from the leading end portion, each of the second and third coolant flow paths is provided at a different position from a position of the chip discharge groove in a circumferential direction.

8. The cutting tool according to any one of claims 1 to 7, wherein a cut portion is formed at the leading end portion of the cutting tool, for enlarging a flow path of coolant that is supplied from the coolant flow paths and flows up to the chip discharge groove.

9. The cutting tool according to claim 8, wherein the cut portion is configured with an inclined surface that is not perpendicular to the central axis.

10. The cutting tool according to claim 8 or 9, wherein, in a leading end view where the cutting tool is viewed from the leading end portion, the cut portion is provided on a side where the second coolant flow path or the third coolant flow path is located.

11. The cutting tool according to any one of claims 1 to 7, wherein the shank part has an outer diameter which is larger than an outer diameter of the leading end portion.

12. The cutting tool according to any one of claims 1 to 11, wherein a stepped part is formed between the shank part and a portion extending from the shank part toward the leading end portion.

13. The cutting tool according to any one of claims 1 to 12, wherein each of the plurality of coolant flow paths is provided only on the periphery of the shank part.

14. The cutting tool according to any one of claims 1 to 13, wherein the shank part has a cut portion that is formed as a flat surface and acts as an anti-rotation stop against the sleeve of the machine tool, and wherein the coolant flow paths are formed at positions that do not overlap with the cut portion.

15. The cutting tool according to any one of claims 1 to 14, wherein the coolant flow paths are configured with a groove in a circular arc shape.
